# EUROPÄISCHE PATENTSCHRIFT

(11) **EP 2 042 431 B1**
(45) Veröffentlichungstag und Bekanntmachung des Hinweises auf die Patenterteilung: **05.01.2011**
(21) Anmeldenummer: 07116850.4
(22) Anmeldetag: 20.09.2007
(51) Int. Cl.: B65B 1/36, B65B 37/20, B65B 39/00, B65G 53/52

(54) **Dosiervorrichtung und Dosiereinheit mit elektrostatischem Verschluss**
Metering device and metering unit with electrostatic closure
Dispositif de dosage et unité de dosage dotée d'une fermeture électrostatique

(43) Veröffentlichungstag der Anmeldung: 01.04.2009
(73) Patentinhaber: Mettler-Toledo AG, 8606 Greifensee (CH)
(72) Erfinder: Nufer, Bruno, 8308 Illnau (CH)

(56) Entgegenhaltungen:
- US-A- 5 947 169
- US-A1- 2002 033 173

## Beschreibung

Die vorliegende Erfindung bezieht sich auf eine Dosiervorrichtung für pulver- oder granulatförmiges Dosiergut.

Solche Dosiervorrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches einen Dosierkopf aufweist. Dabei ist es wünschenswert, die zu dosierende Substanz durch eine kleine Öffnung der Dosiervorrichtung auszutragen, so dass sie auch gezielt in ein Gefäss mit einem kleinen Öffnungsquerschnitt abgefüllt werden kann.

Dosiervorrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Entnahmegefäss mit einem verschliessbaren Auslass an seiner Unterseite besteht. Als Verschlusselement dient ein kegelförmiger, sich nach oben verjüngender und zum Öffnen einer Austrittsöffnung vertikal nach unten verstellbarer Ventilkörper, der in seiner Offenstellung rotiert und Mittel zum Fördern des Gutes in Richtung der Auslassöffnung besitzt. Ferner wird das Entnahmegefäss von einer Antriebswelle durchdrungen, welche an der Oberseite des Entnahmegefässes über dieses hinausragt und mit einem Antrieb gekoppelt ist. Das zu befüllende Zielgefäss ruht während des Dosiervorganges auf einer Waage, deren Wägesignal an eine Prozessoreinheit in der Antriebsvorrichtung des Verschlusselements weitergeleitet wird. Durch die Erfassung der ausdosierten Menge Dosiergut mittels einer Waage, kann das Verschlusselement bei Erreichen des Zielgewichtes im richtigen Moment geschlossen werden.

Die vorangehend beschriebene Dosiervorrichtung weist den Nachteil auf, dass sie während des Dosiervorganges das Dosiergut zermahlen kann. Dieses Zermahlen ist aber bei biotechnisch hergestellten Wirkstoffsubstanzen gänzlich unerwünscht da insbesondere die Oberflächenstruktur dieser Substanzen massgeblich an deren Wirkung beteiligt ist. Gerade in der Entwicklungsphase neuer Wirkstoffe dürfen diese Oberflächenstrukturen nicht zerstört werden, da dies in den Versuchen sonst falsche Resultate erbringen könnte.

Um diesen Nachteil zu beheben, wurden verschiedene Dosiersysteme entwickelt. Zu diesen Dosiersystemen gehört beispielsweise auch die in der US 7 134 459 B2 offenbarte Pulverdosiervorrichtung mit einer Dosiereinheit, welche ähnlich einer Spritze, Pulver mittels Unterdruck aus einem Behälter ansaugt und mittels Überdruck in ein Zielgefäss ausstösst. Eine solche Dosiervorrichtung ist aber nur für grössere Dosiermengen im Grammbereich geeignet, sehr unpräzise und die damit dosierbare Pulverpalette sehr beschränkt.

Unter Pulverpalette sind verschiedene Pulver zu verstehen, welche voneinander unterschiedliche Eigenschaften bezüglich der Korngrösse, der Fliessfähigkeit, Klebrigkeit und dergleichen aufweisen.

In der US 6 340 036 B1 wird eine Dosiervorrichtung offenbart, deren Austrittsöffnung durch Dosiergut selbst verschlossen wird. In deren Austrittsöffnung ist eine ringförmige, semipermeable Membran angeordnet, welche einen Hohlraum von der Austrittsöffnung trennt. Der Aufbau des Verschlusspfropfens wird mittels der Beaufschlagung des Hohlraums mit Unterdruck erzeugt, die Zerstörung des Verschlusspfropfens erfolgt mittels eines Druckstosses. Nach der Aktivierung der Saugvorrichtung werden solange Partikel angezogen, bis diese über der semipermeablen Membran eine nahezu dichte Schicht aufgebaut haben, wodurch ein die Austrittsöffnung verschliessender Verschlusspfropfen gebildet wird.

Wie bei der in US 7 134 459 B2 beschriebenen Dosiervorrichtung, kann auch mit der in der US 6 340 036 B1 beschriebenen Dosiervorrichtung nur eine sehr kleine Pulverpalette, im schlechtesten Falle nur ein spezifisches Pulver ausdosiert werden, auf dessen Eigenschaften wie Partikelgrösse, Partikelform und dergleichen, die semipermeable Membran ausgelegt ist. Wird nämlich Pulver mit beispielsweise sehr kleinen Partikeln dosiert, werden die Poren der semipermeablen Membran verstopft und können auch mittels Druckstössen nicht mehr herausgelöst werden. Dies ist insbesondere bei harten, scharfkantigen Pulverpartikeln der Fall. Soll ein Pulver mit einer sehr breiten Korngrössenverteilung dosiert werden, können bei dieser Dosiervorrichtung die kleinsten Partikel durch die Poren dringen und das System zur Erzeugung des Unterdrucks beschädigen und insbesondere kontaminieren. Ferner wird bei der Zerstörung des Verschlusspfropfens mittels eines Druckstosses schlagartig viel Dosiergut aus der Austrittsöffnung geschleudert, wodurch die Austragungsmenge kaum präzise gesteuert werden kann.

Um möglichst präzise Dosierungen zu erreichen, ist das in der US 5 145 009 A beschriebene Verschlusselement derart ausgestaltet, dass der Öffnungsquerschnitt der Austrittsöffnung stufenlos variiert werden kann. Die Veränderung des austretenden Massenstroms, insbesondere bei kleinen Austrittsöffnungsquerschnitten, verhält sich nicht proportional zur Veränderung des Austrittsöffnungsquerschnitts und diese Gegebenheiten müssen im Dosieralgorithmus berücksichtigt werden. Die Veränderung des Massenstroms bei derartigen Dosiersystemen wird entscheidend durch die Pulvereigenschaften wie die Partikelgrösse, die Partikelform, das Koagulationsverhalten und das Anhaftungsverhalten an den Oberflächen der Austrittsöffnung beeinflusst. Erschwerend kommt hinzu, dass sich die Pulvereigenschaften ein und desselben Pulvertyps stark verändern können, beispielsweise infolge der Veränderung des Feuchtigkeitsgehaltes. Üblicherweise wird im Dosieralgorithmus deshalb festgelegt, dass ab einer gewissen ausdosierten Menge Dosiergut mittels des Verschlusselements die Austrittsöffnung soweit reduziert wird, dass nur noch geringe Mengen Dosiergut austreten und beim Erreichen des Zielgewichtes die Austrittsöffnung ganz geschlossen wird. Eine Dosierung mit solchen Dosiersystemen benötigt daher sehr viel Zeit.

Aufgabe der vorliegenden Erfindung ist es, eine Dosiereinheit beziehungsweise eine Dosiervorrichtung zur Verfügung zu stellen, mit welcher präzise, schonend und schnell pulverförmiges Dosiergut in ein Zielgefäss dosiert werden kann.

Diese Aufgabe wird gelöst durch die Merkmale des unabhängigen Anspruchs 1.

Eine Dosiereinheit zum Lagern und Dosieren von pulver- oder granulatförmigem Dosiergut beinhaltet ein Gehäuse, welches mindestens einen Aufnahmeraum für Dosiergut und eine mit dem Aufnahmeraum verbundene Austrittsöffnung aufweist. Ferner weist die Dosiereinheit mindestens ein, den Aufbau und/oder den Abbau eines aus Dosiergut bestehenden Verschlusspfropfens und/oder einer aus Dosiergut bestehenden Verschlussblende in der Austrittsöffnung beeinflussendes, elektrostatisches Koagulationsmittel auf.

Die Schliessung beziehungsweise die Verengung der Austrittsöffnung erfolgt somit durch die elektrostatische Anziehung und Koagulation von Dosiergut zum Aufbau eines aus Dosiergut bestehenden Verschlusspfropfens oder einer Verschlussblende. Der besseren Lesbarkeit wegen wird das auf der Basis der Elektrostatik arbeitende Mittel zum Anziehen und Koagulieren von Dosiergut als elektrostatisches Koagulationsmittel bezeichnet. Es versteht sich von selbst, dass die Dosiervorrichtung nur dann zufriedenstellend arbeitet, wenn das Dosiergut aufgeladen werden kann. Die meisten isolierenden Stoffe, beispielsweise organische Verbindungen weisen diese Eigenschaften auf. Hilfsweise kann bei nicht ladbarem Dosiergut auch ein inertes, elektrostatisch koagulierbares Pulver beigemengt oder leitende Pulverpartikel mit einer inerten Isolationsschicht versehen werden.

Möglicherweise kann das verfüllte Dosiergut bereits durch den Einfüllprozess stark elektrostatisch geladen sein und kann dadurch einen Verschlusspfropfen bilden, ohne dass das elektrostatische Koagulationsmittel aktiviert werden muss. In diesem Falle, oder wenn der Verschlusspfropfen nach dem Ausschalten des elektrostatischen Koagulationsmittels nicht von selbst zerfällt, kann, wie weiter unten beschrieben, das elektrostatische Koagulationsmittel auch zum Abbau eines Verschlusspfropfens eingesetzt werden.

Der Verschlusspfropfen zerfällt bei den meisten, gut fliessfähigen Pulvern unmittelbar nach Ausschalten des elektrostatischen Koagulationsmittels, wodurch die Austrittsöffnung schlagartig geöffnet wird. Sobald die Zielmenge ausdosiert ist, wird durch die Aktivierung des elektrostatischen Koagulationsmittels ebenso schlagartig ein Verschlusspfropfen gebildet und die Austrittsöffnung verschlossen. Dies vereinfacht den Dosieralgorithmus entscheidend, da nicht eine kontinuierliche Veränderung des Austrittsöffnungsquerschnitts und die damit verbundenen Probleme berücksichtigt werden müssen. Ferner führt dieses schlagartige Öffnen und Schliessen zu wesentlich verkürzten Dosierzeiten gegenüber Dosiervorrichtungen mit mechanischen Verschlusselementen.

Sofern nur kleinste Mengen ausdosiert werden sollen, beziehungsweise damit bei sehr fliessfähigen Pulvern und Granulaten nicht zuviel ausdosiert wird, kann das elektrostatische Koagulationsmittel auch nur teilaktiviert werden, so dass sich eine aus Dosiergut bestehende und die Austrittsöffnung verengende Verschlussblende bildet. Dabei kann durch die verbleibende Öffnung weiterhin ein reduzierter Massenstrom an Dosiergut austreten.

Das mindestens eine elektrostatische Koagulationsmittel kann mindestens eine Elektrode aufweisen, wobei mittels einer Beaufschlagung der Elektrode mit hoher Spannung Partikel des Dosierguts elektrostatisch an das Koagulationsmittel anziehbar und koagulierbar sind.

Sobald die Elektrode unter einer Gleichspannung steht, werden die Partikel angezogen und bilden einen Verschlusspfropfen, der die Austrittsöffnung blockiert, so dass kein Dosiergut, beispielsweise unter Einwirkung der Schwerkraft, austreten kann. Je nach Eigenschaften des Dosierguts kann die Elektrode unmittelbar nach dem Aufbau des Verschlusspfropfens von der Spannungsquelle getrennt werden, gegebenenfalls muss sie aufrecht erhalten werden. Sobald Dosiergut ausdosiert werden soll, kann die Elektrode geerdet werden, der Pfropfen zerfällt und das Dosiergut beginnt aus der Austrittsöffnung auszufliessen. Wenn eine Erdung zum Abbau des Verschlusspfropfens nicht ausreicht, kann die Elektrode auch mit einer Wechselspannung beaufschlagt werden.

Sofern beispielsweise die Elektrode zum Aufbau des Verschlusspfropfens mit einer negativen Spannung beaufschlagt wurde, ist die Ladung des Verschlusspfropfens bekannt. Um den Austritt der Partikel zu unterstützen oder gar den Verschlusspfropfen aus der Austrittsöffnung zu ziehen, kann im Bereich des Zielgefässbodens eine positiv geladene Gegenelektrode angeordnet werden, welche die negativ geladenen Partikel anzieht. Selbstverständlich kann bei dieser Ausgestaltung mittels einer mit gepulster Gleichspannung beaufschlagten Elektrode der Dosiervorgang unterstützt werden.

Versuche mit verschiedenen Pulvern haben gezeigt, dass sich eine sehr breite Palette mittels dieser Dosiertechnologie handhaben lässt. Insbesondere Dosiergut mit sehr geringem Feuchtigkeitsgehalt haftet sehr gut am elektrostatischen Koagulationsmittel.

Bezüglich der Ausgestaltung und der Anordnung des elektrostatischen Koagulationsmittels zur Dosiereinheit stehen verschiedene Möglichkeiten offen.

In einer ersten Ausführung kann das mindestens eine elektrostatische Koagulationsmittel stabförmig ausgebildet, sowie innerhalb des Gehäuses unmittelbar vor oder in der Austrittsöffnung angeordnet sein.

In einer zweiten Ausführung kann das mindestens eine elektrostatische Koagulationsmittel ausserhalb des Gehäuses unmittelbar vor oder in der Austrittsöffnung angeordnet sein. Versuche mit einem lonisator, welcher ausserhalb des Gehäuses angeordnet und gegen die Austrittsöffnung gerichtet war, haben bei dessen Aktivierung ebenfalls zum Aufbau eines Verschlusspfropfens geführt.

In einer dritten Ausführung kann das mindestens eine elektrostatische Koagulationsmittel ringförmig um die Austrittsöffnung oder in der Austrittsöffnung angeordnet sein.

Sofern mehr als ein elektrostatisches Koagulationsmittel verwendet werden soll, können selbstverständlich diese Ausführungsvarianten miteinander kombiniert werden. Beispielsweise könnten eine stabförmige Elektrode innerhalb des Gehäuses und eine ringförmige Elektrode in der Austrittsöffnung angeordnet sein.

Ferner kann das stabförmig ausgebildete elektrostatische Koagulationsmittel oder ein stabförmiges Verschlusselement mittels eines Federelements gegen die Austrittsöffnung gedrückt werden und die Austrittsöffnung dicht verschliessen. Dadurch wird verhindert, dass beim Befüllen der Dosiereinheit und/oder beim Einsetzen der Dosiereinheit in eine Dosiervorrichtung unkontrolliert Dosiergut aus der Austrittsöffnung austreten kann. Durch lineare Verschiebung des stabförmigen elektrostatischen Koagulationsmittels entlang seiner Mittellängsachse und gegen die Richtung der Federkraft wird einerseits der Aufbau eines Verschlusspfropfens und/oder Verschlussblendenrings ermöglicht und/oder die Austrittsöffnung freigegeben.

Mittels des stabförmig ausgebildeten elektrostatischen Koagulationsmittels oder des stabförmigen Verschlusselements kann durch lineare Verschiebung entlang deren Mittellängsachse auch der Austrittsquerschnitt der Austrittsöffnung variiert werden. Der Austrittsquerschnitt kann durch diese Massnahme den Eigenschaften des zu dosierenden Dosierguts angepasst werden. Zudem können durch diese Massnahme auch Kleinstmengen an Dosiergut sehr präzise ausdosiert werden. Ferner kann mit der Reduzierung des Austrittsquerschnitts die an der Elektrode anzulegende erforderliche Gleichspannung reduziert werden.

Vorzugsweise weist das Gehäuse ferner eine mit dem Aufnahmeraum verbundene Einfüllöffnung auf, die mit einem Verschluss oder mit einem Entnahmegefäss verschließbar ist. Dadurch kann die Dosiereinheit problemlos mit Dosiergut befüllt werden, ohne dass dieses durch die meistens sehr kleine Austrittsöffnung in den Aufnahmeraum gestopft werden muss.

Um aus der Dosiereinheit Dosiergut austragen zu können, muss eine Dosiervorrichtung mit mindestens einer Antriebseinheit, mindestens einer Prozessoreinheit und mindestens einer der Erfassung des ausdosierten Dosierguts dienenden Messeinheit, vorhanden sein. Mit dieser Dosiervorrichtung ist mindestens eine Dosiereinheit auswechselbar verbindbar. Mittels der Prozessoreinheit kann in Abhängigkeit des Messsignals der Messeinheit das mindestens eine Koagulationsmittel gesteuert werden, wodurch der Aufbau und der Abbau eines Verschlusspfropfens und/oder Verschlussblendenrings beeinflussbar ist.

Die Messeinheit kann ein gravimetrisches Messinstrument, beispielsweise eine Waage oder ein Wägemodul sein, aber auch ein Messsystem, mit welchem der Füllstand eines Zielgefässes oder das ausdosierte Volumen erfasst und gemessen werden kann.

Um die Auflösung des Verschlusspfropfens oder der Verschlussblende zu unterstützen, kann die Antriebseinheit der Dosiervorrichtung mindestens einen auf das Dosiergut einwirkenden Aktuator, insbesondere einen Vibrator oder ein Rührwerk aufweisen.

Wenn sehr frei fliessendes Dosiergut in Kleinstmengen ausdosiert werden muss, muss nicht zwingend mit dem elektrostatischen Koagulationsmittel oder mit dem stabförmigen Verschlusselement eine Verschlussblende erzeugt werden. Die Antriebseinheit kann auch eine Aufnahmevorrichtung aufweisen, mit welcher Aufnahmevorrichtung die Dosiereinheit verbindbar ist. Diese Aufnahmevorrichtung kann mittels einer Schwenkeinheit schwenkbar ausgebildet sein, um insbesondere die Fliesseigenschaften des Dosierguts zu berücksichtigen.

Einzelheiten der erfindungsgemässen Dosiereinheit und Dosiervorrichtung ergeben sich anhand der Beschreibung der in den Zeichnungen dargestellten Ausführungsbeispiele. Es zeigen:
- Figur 1: eine erfindungsgemässe Dosiervorrichtung in räumlicher Darstellung mit einer Antriebseinheit einer Aufnahmevorrichtung und einer in die Aufnahmevorrichtung eingesetzten Dosiereinheit;
- Figur 2: eine Dosiereinheit in geschnittener, räumlicher Darstellung in einer ersten Ausführung mit einem ringförmig ausgebildeten, elektrostatischen Koagulationsmittel und mit einem stabförmigen Verschlusselement;
- Figur 3: eine Dosiereinheit in geschnittener, räumlicher Darstellung in einer zweiten Ausführung mit einem Entnahmegefäss, einem Schieber und einem stabförmig ausgebildeten, elektrostatischen Koagulationsmittel.

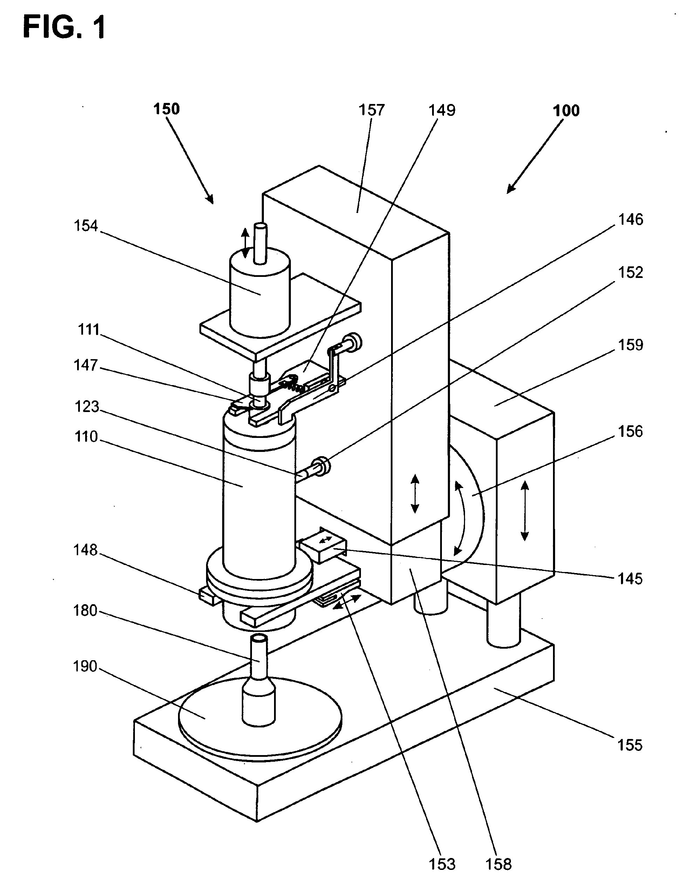

Die Figur 1 zeigt eine Dosiervorrichtung 100 in räumlicher Darstellung, die eine Antriebseinheit 150 aufweist, in welche eine Dosiereinheit 110 eingesetzt und aus dieser wieder entfernt werden kann. Die Antriebseinheit 150 weist eine, ein Oberteil 157 und ein Unterteil 158 beinhaltende Aufnahmevorrichtung auf, die linear voneinander und zueinander verschiebbar sind. Dies ermöglicht die Verwendung von Dosiereinheiten 110 unterschiedlicher Länge. Um einen einfachen Wechsel der Dosiereinheit 110 und einen sicheren und genauen Dosierbetrieb zu gewährleisten, muss die Dosiereinheit 110 beziehungsweise die Aufnahmevorrichtung geeignete mechanische, gegebenenfalls mechanische und elektrische Verbindungselemente 149, 148 aufweisen, welche miteinander formschlüssig korrespondieren. Am zweiten mechanischen Verbindungselement 149 sind eine horizontale Verriegelung 147 und eine vertikale Verriegelung 146 angeordnet, um die Dosiereinheit 110 in der Aufnahmevorrichtung gegen herausfallen zu sichern.

Die Dosiereinheit 110 in Figur 1 weist eine zylindrische Grundform auf. Grundsätzlich sind aber auch andere Dosiereinheit- Formen mit beispielsweise quadratischem, sechs- oder achteckigem Aussen- und Innenquerschnitt möglich. Die in die Antriebseinheit 150 eingesetzte Dosiereinheit 110 ist mit ihrer Längsachse in senkrechter Richtung dargestellt. Da die Aufnahmevorrichtung mittels einer Schwenkeinheit 156 schwenkbar an einer Hubeinheit 159 festgelegt ist, kann die Aufnahmevorrichtung um eine horizontale Achse verschwenkt werden. Mittels des Verschwenkens der Aufnahmevorrichtung beziehungsweise der Dosiereinheit 110, kann die Fliessgeschwindigkeit des aus der Austrittsöffnung austretenden Dosierguts beeinflusst werden. Vorzugsweise liegt diese Schwenkachse in derselben horizontalen Ebene wie die hier nicht sichtbare Austrittsöffnung der Dosiereinheit 110. Dadurch verbleibt der Querschnittflächenmittelpunkt der Austrittsöffnung auch bei verschwenkter Dosiereinheit 110 immer an derselben Stelle, wodurch ein Zielgefässes 180 immer an derselben Stelle aufgelegt werden kann. Die Hubeinheit 159 ist mit einer Grundplatte 155 verbunden, in welche auch eine Messeinheit 190 integriert ist. Durch die Hubeinheit 159 kann der Abstand zwischen der Austrittsöffnung und der senkrecht unter deren Querschnittflächenmittelpunkt angeordneten Messeinheit 190 eingestellt werden. Dies ermöglicht das Befüllen von Zielgefässen 180 mit unterschiedlichen Höhen.

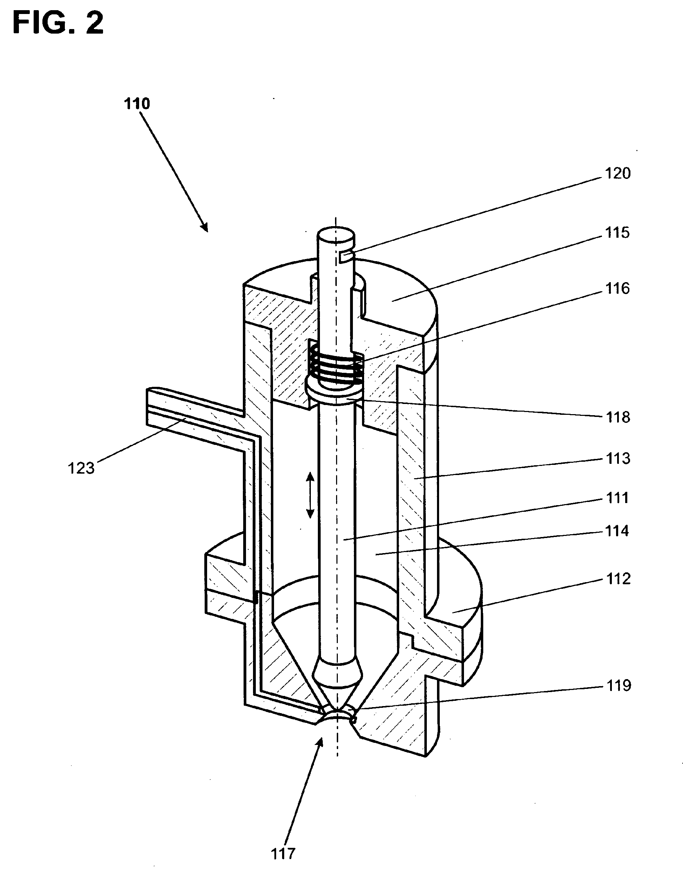

Der Aufbau der dargestellten Dosiereinheit 110 wird im Detail in der Beschreibung von Figur 2 offenbart. Die Dosiereinheit 110 umfasst nebst den Verbindungsstellen mit der Aufnahmevorrichtung zwei Schnittstellen, die erste Schnittstelle ist das Ende eines stabförmigen Verschlusselements 111 und die zweite Schnittstelle das aus der Dosiereinheit herausragende Ende einer elektrischen Verbindung 123. Das Ende des stabförmigen Verschlusselements 111 ist mit einem am Oberteil 157 festgelegten Antrieb 154 verbunden, mit welchem ein genau einstellbarer Hub erzeugt werden kann. Selbstverständlich kann das Verschlusselement 111 auch ein Rührwerk aufweisen, welches dem Einreissen von Pulverbrücken im Aufnahmeraum dient. Im Falle eines Rührwerkes kann der Antrieb 154 zusätzlich das Verschlusselement 111 in Drehung versetzen. Die elektrische Verbindung 123 ist mit einer Anschlussbuchse 152 verbindbar.

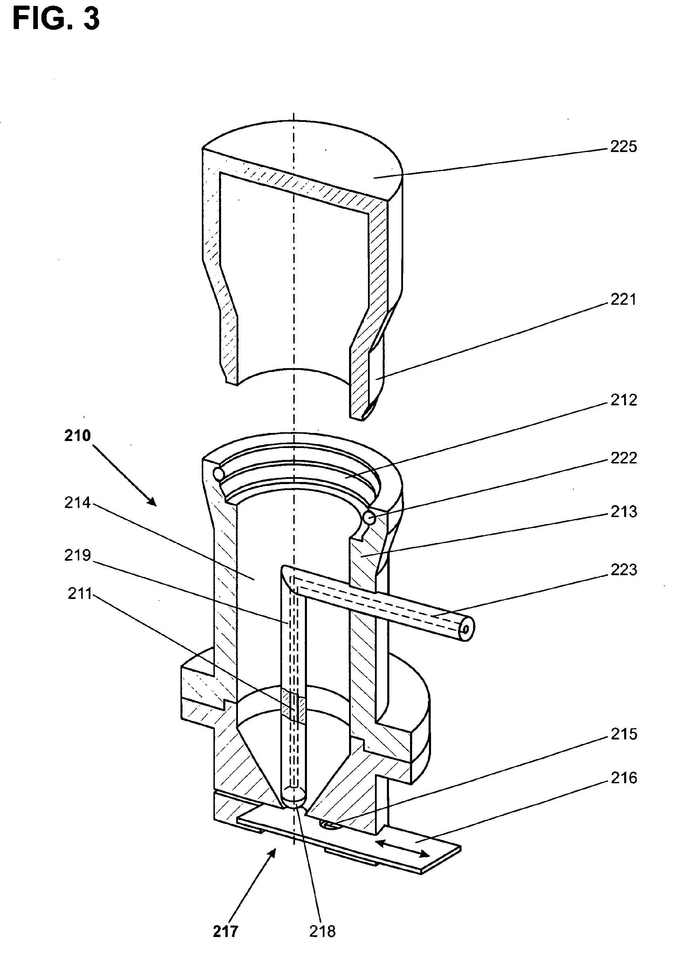

Die Dosiervorrichtung 100 ist ferner, wie in Figur 1 dargestellt, mit einer Schiebermechanik 153 ausgerüstet, deren Antrieb im Unterteil 158 integriert ist und eine horizontale Bewegung erzeugt. Dies ermöglicht die Aufnahme von Dosiereinheiten, welche wie in Figur 3 mit einem Schieber ausgerüstet sind. Selbstverständlich kann auch mit der Schiebermechanik 153 die Austrittsöffnung verengt werden um einen Blendeneffekt zu erzeugen.

Um den Zerfall eines aus Dosiergut bestehenden Verschlusspfropfens zu unterstützen, kann die Dosiervorrichtung 100 einen Aktuator 145 aufweisen, welcher in geeigneter Weise auf die Dosiereinheit 110 einwirken kann.

Die in Figur 2 in geschnittener, räumlicher Darstellung schematisch dargestellte Dosiereinheit 110 weist ein Gehäuse 113 auf, in welchem ein Aufnahmeraum 114 für Dosiergut und eine mit dem Aufnahmeraum 114 verbundene Austrittsöffnung 117 angeordnet ist. Der Aufnahmeraum 114 ist mit einem Verschluss 115 verschliessbar. Im Verschluss 115 ist ein stabförmiges Verschlusselement 111 angeordnet, welches entlang seiner Mittellängsachse verschiebbar ist. Die Federkraft eines ebenfalls im Verschlusselement 111 angeordneten Federelements 116 wirkt über einen am Verschlusselement 111 ausgebildeten Bund 118 auf das Verschlusselement 111 ein und drückt dieses in Richtung der Austrittsöffnung 117. Solange das Verschlusselement 111 nicht mit dem in Figur 1 beschriebenen Antrieb gekoppelt ist, verschliesst das Verschlusselement 111 die Austrittsöffnung 117 dicht ab. Am der Austrittsöffnung abgewandten Ende des Verschlusselements 111 ist eine Kupplungsnute 120 ausgebildet, welche eine formschlüssiges Verbinden mit dem Antrieb ermöglicht. Nach dem Kuppeln kann mit dem Antrieb der Federkraft entgegengewirkt und durch lineare Verschiebung des Verschlusselements 111 die Austrittsöffnung 117 freigegeben werden.

Beim Befüllen des Aufnahmeraums 114 kann der Verschluss 115 entfernt werden. Jedoch sollte das Verschlusselement 111 im Aufnahmeraum 114 verbleiben, so dass die Austrittsöffnung 117 verschlossen ist. Eine weitere Möglichkeit zur Befüllung bietet das in Figur 2 dargestellte, zweiteilige Gehäuse 113, welches im Bereich eines am Gehäuse 113 ausgebildeten Flansches 112 zu diesem Zwecke trennbar ist.

Im Bereich der Austrittsöffnung 117 ist ein ringförmiges elektrostatisches Koagulationsmittel 119 angeordnet, welches über die elektrische Verbindung 123 mit Spannung beaufschlagt werden kann.

Anhand der Figur 1 und Figur 2 kann nachfolgend ein typischer Dosiervorgang erklärt werden. Wenn eine mit Dosiergut befüllte Dosiereinheit 110 in die Antriebseinheit 150 eingesetzt und die mechanischen und elektrischen Verbindungen gekoppelt sind, kann Dosiergut aus der Dosiereinheit 110 ausgetragen werden. Dazu wird in einem ersten Schritt das elektrostatische Koagulationsmittel 119 mit Spannung beaufschlagt. In einem zweiten Schritt wird das Verschlusselement 111 linear verschoben, so dass die Austrittsöffnung 117 mechanisch geöffnet wird, wobei sich sofort infolge der am Koagulationsmittel 119 angelegten Spannung ein aus Dosiergut bestehender Verschlusspfropfen bildet. In einem dritten Schritt wird die angelegte Spannung reduziert beziehungsweise das elektrostatische Koagulationsmittel 119 von der Spannungsversorgung getrennt, so dass der Verschlusspfropfen zerfällt und das Dosiergut unter Einwirkung der Schwerkraft aus der Dosiereinheit 110 auszufliessen beginnt. Gegebenenfalls kann mittels des Anlegens einer Wechselspannung am elektrostatischen Koagulationsmittel 119 oder mittels des in Figur 1 beschriebenen Aktuators 145 der Zerfall des Verschlusspfropfens und das Fliessverhalten des Dosierguts beeinflusst werden. Anstelle oder in Kombination mit dem Aktuator 145 können auch mit dem Antrieb 154 Vibrationen auf das Verschlusselement 111 aufgegeben werden.

Sobald die Messeinheit 190 meldet, dass die ausdosierte Menge Dosiergut dem Zielgewicht entspricht, wird das elektrostatische Koagulationsmittel 119 sofort mit Spannung beaufschlagt und die Austrittsöffnung 117 verschlossen. Je nach Fallhöhe und austretendem Massenstrom des Dosiergutes kann das zwischen der Dosiereinheit 110 und dem Boden des Zielgefässes 180 im freien Fall befindliche Dosiergut berücksichtigt werden, indem der Massenstrom während des Dosierens gemessen und mit der Fallhöhe verrechnet wird, um dementsprechend das elektrostatische Koagulationsmittel 119 noch vor Erreichen des Zielgewichts zu aktivieren.

Bei besonders freifliessendem Dosiergut kann mittels einer Teilaktivierung des elektrostatischen Koagulationsmittels die Austrittsöffnung teilweise mit einer aus Dosiergut bestehenden Blende verschlossen werden. Eine Teilaktivierung lässt sich entweder durch eine Spannungsreduktion oder durch eine Segmentierung und selektive Ansteuerung der im elektrostatischen Koagulationsmittel verbauten Elektrode oder der Elektroden erreichen.

In Figur 3 ist eine zweite Ausführung einer erfindungsgemässen Dosiereinheit 210 in dreidimensionaler Darstellung und im Schnitt dargestellt. Die Dosiereinheit 210 weist ein Gehäuse 213 auf, an dessen oberem Ende eine Einfüllöffnung 212 ausgebildet ist. Am unteren Ende des Gehäuses 213 ist eine Austrittsöffnung 217 ausgebildet. Zwischen der Austrittsöffnung 217 und der Einfüllöffnung 212 ist im Gehäuse 213 ein Aufnahmeraum 214 zur Aufnahme von Dosiergut ausgebildet. Durch die Einfüllöffnung 212 ist ein Entnahmegefäss 225 mit dem Gehäuse 213 der Dosiereinheit 210 verbindbar. Um das Eindringen von Verschmutzungen zu verhindern, weist die Einfüllöffnung eine Dichtung 222 auf, welche an der Dichtungsfläche 221 des mit dem Gehäuse 213 verbundenen Entnahmegefässes 225 satt anliegt und diese Verbindungsstelle gegen äussere Einflüsse und/oder gegen das Austreten von Dosiergut abdichtet.

Im Aufnahmeraum 214 ist ein stabförmig ausgebildetes elektrostatisches Koagulationsmittel 219 angeordnet, dessen unteres Ende im Bereich der Austrittsöffnung 217 angeordnet ist. Das obere Ende ist mit einer elektrischen Verbindung 223 verbunden, welche orthogonal zur Mittellängsachse des stabförmigen Koagulationsmittels 219 aus dem Gehäuse 213 geführt ist.

Wie in der Figur 3 dargestellt, besteht das stabförmige Koagulationsmittel 219 aus einem Mittelleiter 211, welcher mit einer dicken Isolationsschicht umhüllt ist. Am unteren Ende des Koagulationsmittels 219 ist eine kugelförmige Elektrode 218 angeordnet und mit dem Mittelleiter 211 verbunden. Selbstverständlich sind viele verschiedene Elektrodenformen denkbar wie sternförmige Elektroden, Gitterelektroden, siebförmige Elektroden mit zylindrischen Bohrungen und dergleichen mehr.

Im Bereich der Austrittsöffnung 217 ist ferner ein Schieber 216 angeordnet, welcher eine Durchtrittsöffnung 215 aufweist. Sobald die Durchtrittsöffnung 215 durch Verschiebung des Schiebers 216 in den Bereich der Austrittsöffnung 217 gelangt, wird die Austrittsöffnung 217 freigegeben und das Dosiergut kann aus der Dosiereinheit 210 austreten. Damit dies nicht unbeabsichtigt geschieht, kann vor dem Verschieben des Schiebers 216 ebenfalls das elektrostatische Koagulationsmittel 219 mit Spannung beaufschlagt werden.

Selbstverständlich können die in Figur 2 und Figur 3 dargestellten Ausführungen miteinander kombiniert werden. Denkbar sind Dosiereinheiten mit einer Kombination von stabförmigen und ringförmigen Elektroden. Ferner kann auch die stabförmige Elektrode an Stelle eines Verschlusselements linear verschiebbar angeordnet sein. Des Weiteren ist gerade beim Lagern und bei der Handhabung besonders toxischer Substanzen eine Kombination von Verschlusselement und Schieber vorteilhaft.

## Patentansprüche

1. Dosiereinheit (110, 210) zum Lagern und Dosieren von pulverförmigem Dosiergut, mit einem Gehäuse (113, 213), welches mindestens einen Aufnahmeraum (114, 214) für Dosiergut und eine mit dem Aufnahmeraum (114, 214) verbundene Austrittsöffnung (117, 217) aufweist, **dadurch gekennzeichnet, dass** ferner die Dosiereinheit (110, 210) mindestens ein, den Aufbau und/oder den Abbau eines aus Dosiergut bestehenden Verschlusspfropfens und/oder eine aus Dosiergut bestehende Verschlussblende in der Austrittsöffnung (117, 217) beeinflussendes, elektrostatisches Koagulationsmittel (119, 219) aufweist.

2. Dosiereinheit (110, 210) nach Anspruch 1, **dadurch gekennzeichnet, dass** das mindestens eine elektrostatische Koagulationsmittel (119, 219) mindestens eine Elektrode (218) aufweist, wobei mittels einer Beaufschlagung der Elektrode (218) mit hoher Spannung Partikel des Dosierguts an das elektrostatische Koagulationsmittel (119, 219) anziehbar und koagulierbar sind.

3. Dosiereinheit (110, 210) nach Anspruch 1 oder 2, **dadurch gekennzeichnet, dass** zum Aufbau und gegebenenfalls zum Erhalten eines aus Dosiergut bestehenden Verschlusspfropfens oder einer Verschlussblende das mindestens eine elektrostatische Koagulationsmittel (119, 219) mit einer Gleichspannung beaufschlagt ist.

4. Dosiereinheit (110, 210) nach einem der Ansprüche 1 bis 3, **dadurch gekennzeichnet, dass** zum Abbau eines aus Dosiergut bestehenden Verschlusspfropfens oder einer Verschlussblende das mindestens eine elektrostatische Koagulationsmittel (119, 219) mit einer Wechselspannung beaufschlagt ist.

5. Dosiereinheit (110, 210) nach einem der Ansprüche 1 bis 4, **dadurch gekennzeichnet, dass** das mindestens eine Koagulationsmittel (119) stabförmig ausgebildet ist sowie innerhalb des Gehäuses (113, 213) unmittelbar vor oder in der Austrittsöffnung (117, 217) angeordnet ist.

6. Dosiereinheit (110, 210) nach einem der Ansprüche 1 bis 5, **dadurch gekennzeichnet, dass** das mindestens eine elektrostatische Koagulationsmittel (119, 219) ausserhalb des Gehäuses (113, 213) unmittelbar vor oder in der Austrittsöffnung (117, 217) angeordnet ist.

7. Dosiereinheit (110, 210) nach einem der Ansprüche 1 bis 6, **dadurch gekennzeichnet, dass** das mindestens eine elektrostatische Koagulationsmittel (219) ringförmig um die Austrittsöffnung (117, 217) oder in der Austrittsöffnung (117, 217) angeordnet ist.

8. Dosiereinheit (110, 210) nach Anspruch 7, **dadurch gekennzeichnet, dass** das stabförmig ausgebildete elektrostatische Koagulationsmittel (119) oder ein stabförmiges Verschlusselement (111) mittels eines Federelements (116) gegen die Austrittsöffnung (117, 217) gedrückt wird und die Austrittsöffnung (117, 217) dicht verschliesst, wobei durch lineare Verschiebung des stabförmigen, elektrostatischen Koagulationsmittels (119) oder stabförmigen Verschlusselements (111) entlang seiner Mittellängsachse und gegen die Richtung der Federkraft der Aufbau eines Verschlusspfropfens und/oder Verschlussblendenrings ermöglicht und/oder die Austrittsöffnung (117, 217) freigegeben wird.

9. Dosiereinheit (110, 210) nach einem der Ansprüche 1 bis 8, **dadurch gekennzeichnet, dass** mittels des stabförmig ausgebildeten elektrostatischen Koagulationsmittels (119) oder mittels eines stabförmigen Verschlusselements (111) durch lineare Verschiebung entlang seiner Mittellängsachse der Austrittsquerschnitt der Austrittsöffnung (117, 217) variierbar ist.

10. Dosiereinheit (110, 210) nach einem der Ansprüche 1 bis 9, **dadurch gekennzeichnet, dass** das Gehäuse (113, 213) ferner eine mit dem Aufnahmeraum (114, 214) verbundene Einfüllöffnung (212) aufweist, die mit einem Verschluss (115) oder mit einem Entnahmegefäss (225) verschliessbar ist.

11. Dosiereinheit (110, 210) nach einem der Ansprüche 1 bis 10, **dadurch gekennzeichnet, dass** die Austrittsöffnung (117, 217) einen dem Verschliessen derselben dienenden Schieber (216) aufweist.

12. Dosiervorrichtung (100) mit mindestens einer Antriebseinheit (150), mindestens einer Prozessoreinheit und mindestens einer der kontinuierlichen Erfassung des ausdosierten Dosierguts dienenden Messeinheit (190), **dadurch gekennzeichnet, dass** mindestens eine Dosiereinheit (110, 210) nach einem der Ansprüche 1 bis 11, mit der Dosiervorrichtung (100) auswechselbar verbindbar ist, und dass mittels der Prozessoreinheit in Abhängigkeit des Messsignals der Messeinheit (190) das mindestens eine elektrostatische Koagulationsmittel (119, 219) steuerbar und dadurch der Aufbau und Abbau eines Verschlusspfropfens und/oder Verschlussblendenrings beeinflussbar ist.

13. Dosiervorrichtung (100) nach Anspruch 12, **dadurch gekennzeichnet, dass** die Antriebseinheit (150) mindestens einen auf das Dosiergut einwirkenden Aktuator (145), insbesondere einen Vibrator oder ein Rührwerk aufweist.

14. Dosiervorrichtung (100) nach Anspruch 12 oder 13, **dadurch gekennzeichnet, dass** die Antriebseinheit (150) eine Aufnahmevorrichtung (157, 158), eine Hubeinheit (159) und eine zwischen der Hubeinheit (159) und der Aufnahmevorrichtung (157, 158) angeordnete Schwenkeinheit (156) aufweist, mit welcher Aufnahmevorrichtung (157, 158) die Dosiereinheit (110, 210) verbindbar ist und die Aufnahmevorrichtung (157, 158) in Bezug zur Hubeinheit (159) schwenkbar ist.

## Claims

1. Dosage-dispensing unit (110, 210) serving to store and dispense dosage material in powder form, said dosage-dispensing unit (110, 210) comprises a housing (113, 213) which has at least one receptacle space (114, 214) for dosage material and an outlet orifice (117, 217) connected to the receptacle space (114, 214), **characterized in that** the dosage-dispensing unit (110, 210) comprises at least one electrostatic coagulant means (119, 219) which affects the build-up and/or the break-down of a closure plug consisting of dosage material and/or of an aperture shutter consisting of dosage material in the outlet orifice (117, 217).

2. Dosage-dispensing unit (110, 210) according to claim 1, **characterized in that** the at least one electrostatic coagulant means (119, 219) comprises at least one electrode (218), wherein by applying a high voltage to the electrode, particles of the dosage material can be attracted to the electrostatic coagulant means (119, 219) and coagulated.

3. Dosage-dispensing unit (110, 210) according to claim 1 or 2, **characterized in that** in order to build up and/or to maintain a closure plug or an aperture shutter consisting of dosage material, the at least one electrostatic coagulant means (119, 219) can be set under a direct voltage.

4. Dosage-dispensing unit (110, 210) according to one of the claims 1 to 3, **characterized in that** in order to break down a closure plug or an aperture shutter consisting of dosage material, the at least one electrostatic coagulant means (119, 219) can be set under an alternating voltage.

5. Dosage-dispensing unit (110, 210) according to one of the claims 1 to 4, **characterized in that** the at least one electrostatic coagulant means (119) is designed in the shape of a rod and is arranged inside the housing (113, 213) immediately before or in the outlet orifice (117, 217).

6. Dosage-dispensing unit (110, 210) according to one of the claims 1 to 5, **characterized in that** the at least one electrostatic coagulant means (119, 219) is arranged outside of the housing (113, 213) immediately before or in the outlet orifice (117, 217).

7. Dosage-dispensing unit (110, 210) according to one of the claims 1 to 6, **characterized in that** the at least one electrostatic coagulant means (219) is arranged in the shape of a ring around the outlet orifice outside (117, 217) or in the outlet orifice (117, 217).

8. Dosage-dispensing unit (110, 210) according to claim 7, **characterized in that** the rod-shaped electrostatic coagulant means (119) or a rod-shaped closure element (111) is pushed against the outlet orifice (117, 217) by means of a spring element (116) and tightly closes the outlet orifice (117, 217), wherein by a linear displacement of the rod-shaped electrostatic coagulant means (119) or the rod-shaped closure element (111) along its central longitudinal axis and against the direction of the spring force, the build-up of a closure plug and/or a ring-shaped aperture shutter is enabled and/or the outlet orifice (117, 217) is set free.

9. Dosage-dispensing unit (110, 210) according to one of the claims 1 to 8, **characterized in that** the aperture cross-section of the outlet orifice (117, 217) can be varied by means of the rod-shaped electrostatic coagulant means (119) or by means of a rod-shaped closure element (111) through a linear movement of said rod-shaped electrostatic coagulant means (119) or rod-shaped closure element (111) along its central lengthwise axis.

10. Dosage-dispensing unit (110, 210) according to one of the claims 1 to 9, **characterized in that** the housing (113, 213) further comprises a fill opening (212) connected to the receptacle space (114, 214), which can be closed up with a closure cap (115) or with a source container (225).

11. Dosage-dispensing unit (110, 210) according to one of the claims 1 to 10, **characterized in that** the outlet orifice (117, 217) is equipped with a slide shutter (216) serving to close the outlet orifice (117, 217).

12. Dosage-dispensing device (100) comprising at least one drive unit (150), at least one processor unit and at least one measuring unit (190) serving to continuously measure the dispensed dosage material, **characterized in that** at least one dosage-dispensing unit (110, 210) according to one of the claims 1 to 11 is interchangeably connectable to said dosage-dispensing device (100) and that by means of the processor unit, the at least one coagulant means (119, 219) can be controlled dependent on the measurement signal of the measuring unit (190), whereby the build-up and break-down of a closure plug and/or a ring-shaped aperture shutter can be influenced.

13. Dosage-dispensing device (100) according to claim 12, **characterized in that** the drive unit (150) comprises at least one actuator (145) whose action is directed at the dosage material, in particular a vibrator or a stirring mechanism.

14. Dosage-dispensing device (100) according to claim 12 or 13, **characterized in that** the drive unit (150) comprises a holder device (157, 158), a vertically movable unit (159), and a tilting unit (156) arranged between the vertically movable unit (159) and the holder device (157, 158), wherein the dosage-dispensing unit (110, 210) can be connected to said holder device (157, 158) and the holder device (157, 158) can be tilted relative to the vertically movable unit (159).

## Revendications

1. Dispositif de dosage (110, 210) pour le stockage et le dosage d'article à doser pulvérulent, comprenant un boîtier (113, 213), qui présente au moins un espace de logement (114, 214) pour l'article à doser et une ouverture de sortie (117, 217) reliée à l'espace de logement (114, 214), **caractérisée en ce que** l'unité de dosage (110, 210) présente au moins un agent de coagulation (119, 219) électrostatique, influençant la mise en place et/ou le démantèlement d'un bouchon de fermeture à base d'article à doser et/ou un obturateur de fermeture à base d'article à doser dans l'ouverture de sortie (117, 217).

2. Unité de dosage (110, 210) selon la revendication 1, **caractérisée en ce que** le au moins un agent de coagulation (119, 219) électrostatique présente au moins une électrode (218), des particules de l'article à doser pouvant être attirées sur l'agent de coagulation (119, 219) électrostatique et pouvant coaguler au moyen d'une alimentation de l'électrode (218) avec une haute tension.

3. Unité de dosage (110, 210) selon la revendication 1 ou 2, **caractérisée en ce que** le au moins un agent de coagulation (119, 219) électrostatique est alimenté avec une tension continue pour la mise en place et éventuellement pour la conservation d'un bouchon de fermeture à base d'article à doser ou d'un obturateur de fermeture.

4. Unité de dosage (110, 210) selon l'une quelconque des revendications 1 à 3, **caractérisée en ce que** le au moins un agent de coagulation (119, 219) électrostatique est alimenté avec une tension alternative pour le démantèlement d'un bouchon de fermeture à base d'article à doser ou d'un obturateur de fermeture.

5. Unité de dosage (110, 210) selon l'une quelconque des revendications 1 à 4, **caractérisée en ce que** le au moins un agent de coagulation (119) est conçu en forme de barre et est disposé à l'intérieur du boîtier (113, 213) directement devant ou dans l'ouverture de sortie (117, 217).

6. Unité de dosage (110, 210) selon l'une quelconque des revendications 1 à 5, **caractérisée en ce que** le au moins un agent de coagulation (119, 219) électrostatique est disposé à l'extérieur du boîtier (113, 213) directement devant ou dans l'ouverture de sortie (117, 217).

7. Unité de dosage (110, 210) selon l'une quelconque des revendications 1 à 6, **caractérisée en ce que** le au moins un agent de coagulation (219) électrostatique est disposé en forme d'anneau autour de l'ouverture de sortie (117, 217) ou dans l'ouverture de sortie (117, 217).

8. Unité de dosage (110, 210) selon la revendication 7, **caractérisée en ce que** l'agent de coagulation (119) électrostatique conçu en forme de barre ou un élément de fermeture (111) en forme de barre est appuyé au moyen d'un élément de ressort (116) contre l'ouverture de sortie (117, 217) et ferme l'ouverture de sortie (117, 217) de façon étanche, la mise en place d'un bouchon de fermeture et/ou d'une bague d'obturateur de fermeture étant rendue possible et/ou l'ouverture de sortie (117, 217) étant libérée(s) par le déplacement linéaire de l'agent de coagulation (119) électrostatique en forme de barre ou de l'élément de fermeture (111) en forme de barre le long de son axe longitudinal médian et dans le sens opposé à la force de ressort.

9. Unité de dosage (110, 210) selon l'une quelconque des revendications 1 à 8, **caractérisée en ce que** la section de sortie de l'ouverture de sortie (117, 217) peut être modifiée au moyen de l'agent de coagulation (119) électrostatique conçu en forme de barre ou au moyen d'un élément de fermeture (111) en forme de barre par un déplacement linéaire le long de son axe longitudinal médian.

10. Unité de dosage (110, 210) selon l'une quelconque des revendications 1 à 9, **caractérisée en ce que** le boîtier (113, 213) présente également une ouverture de remplissage (212) reliée à l'espace de logement (114, 214), qui peut être fermée avec une fermeture (115) ou un récipient de prélèvement (225).

11. Unité de dosage (110, 210) selon l'une quelconque des revendications 1 à 10, **caractérisée en ce que** l'ouverture de sortie (117, 217) présente un coulisseau (216) servant à la fermeture de cette ouverture.

12. Dispositif de dosage (100) comprenant au moins une dispositif d'entraînement (150), au moins une unité de processeur et au moins une dispositif de mesure (190) servant à l'enregistrement continu de l'article à doser sorti de façon dosée, **caractérisé en ce qu'**au moins une unité de dosage (110, 210) selon l'une quelconque des revendications 1 à 11 peut être reliée de façon amovible au dispositif de dosage (100) et **en ce que** le au moins un agent de coagulation (119, 219) électrostatique peut être commandé au moyen de l'unité de processeur en fonction du signal de mesure de le dispositif de mesure (190) et la mise en place et le démantèlement d'un bouchon de fermeture et/ou d'une bague d'obturateur de fermeture peut (peuvent) être ainsi influencée(s).

13. Dispositif de dosage (100) selon la revendication 12, **caractérisé en ce que** le dispositif d'entraînement (150) présente au moins un actionneur (145) agissant sur l'article à doser, en particulier un vibrateur ou un agitateur.

14. Dispositif de dosage (100) selon la revendication 12 ou 13, **caractérisé en ce que** le dispositif d'entraînement (150) présente un dispositif de réception (157, 158), un dispositif de levage (159) et un dispositif de pivotement (156) disposée entre le dispositif de levage (159) et le dispositif de réception (157, 158), dispositif de réception (157, 158) avec lequel l'unité de dosage (110, 210) peut être reliée et le dispositif de réception (157, 158) pouvant être basculé par rapport à le dispositif de levage (159).
